# EUROPÄISCHE PATENTSCHRIFT

(11) **EP 1 916 457 B1**
(45) Veröffentlichungstag und Bekanntmachung des Hinweises auf die Patenterteilung: **15.08.2012**
(21) Anmeldenummer: 07019791.8
(22) Anmeldetag: 10.10.2007
(51) Int. Cl.: F16H 61/28, F16D 25/12, F16H 61/688, F16D 48/02

(54) **Hydraulische Steuerungsvorrichtung eines automatisierten Doppelkupplunsgetriebes**
Hydraulic controller device of an automated double clutch transmission
Dispositif de commande hydraulique d'un engrenage à double embrayage automatisé

(30) Priorität: 24.10.2006 DE 102006049973; 24.10.2006 DE 102006049972
(43) Veröffentlichungstag der Anmeldung: 30.04.2008
(73) Patentinhaber: ZF Friedrichshafen AG, 88038 Friedrichshafen (DE)
(72) Erfinder: Walter, Thomas, 97509 Kolitzheim (DE); Busold, Thomas, 36039 Fulda (DE); Steiner, Eduard, 97070 Würzburg (DE)

(56) Entgegenhaltungen:
- EP-A1- 1 593 881
- EP-A2- 1 150 040
- DE-A1- 10 347 203
- DE-A1- 19 727 358

## Beschreibung

Die Erfindung betrifft eine hydraulische Steuerungsvorrichtung eines automatisierten Doppelkupplungsgetriebes eines Kraftfahrzeugs, mit einem Ölversorgungsteil, der mindestens ein druckgesteuertes Hauptdruckventil zur Regelung eines Systemdruckes und ein druckgesteuertes Volumenstromregelventil zur Regelung eines Kühlölvolumenstroms aufweist, mit einem Kupplungsbetätigungsteil, der für jede von zwei als aktiv schließbare Lamellenkupplungen ausgebildete Kupplungen ein druckgesteuertes Kupplungsventil zur Steuerung eines zugeordneten Kupplungsstellzylinders aufweist, und mit einem Getriebebetätigungsteil, der mindestens zwei druckgesteuerte Gangventile zur unabhängigen Regelung der Arbeitsdrücke von zwei Druckräumen mehrerer Gangstellzylinder und mehrere druckgesteuerte Wahlventile zur Zuordnung der beiden Gangventile zu den Druckräumen der Gangstellzylinder aufweist.

Automatisierte Doppelkupplungsgetriebe sind in unterschiedlichen Ausführungen seit längerem bekannt und werden teilweise schon seit einigen Jahren erfolgreich in Serienfahrzeugen eingesetzt. Ein Doppelkupplungsgetriebe weist zwei Teilgetriebe mit jeweils einer Eingangswelle, einer Kupplung und mehreren zugeordneten Gängen sowie eine gemeinsame Ausgangswelle auf. Die Gänge sind zumeist wechselweise auf die beiden Teilgetriebe verteilt, wobei die ungeraden Gänge dem einen Teilgetriebe und die geraden Gänge dem anderen Teilgetriebe zugeordnet sind. Hierdurch können die meisten Schaltungen, insbesondere sequenzielle Schaltungen, bei denen jeweils in den nächsthöheren oder in den nächstniedrigeren Gang geschaltet wird, ohne eine Zugkraftunterbrechung durchgeführt werden, indem bei jeweils einem eingelegten Gang pro Teilgetriebe in einem zeitlich überschnittenen Vorgang die dem Lastgang zugeordnete Kupplung geöffnet und die dem Zielgang zugeordnete Kupplung geschlossen wird.

Aufgrund einer hohen Energiedichte, guter Steuerungseigenschaften und der Verfügbarkeit technisch ausgereifter Komponenten ist die Steuerungsvorrichtung eines automatisierten Doppelkupplungsgetriebes bevorzugt hydraulisch ausgebildet. Die betreffenden Kupplungssteller und Gangsteller sind somit als hydraulische Stellzylinder und die zugeordneten Steuerungselemente als hydraulische Schalt- oder Regelventile aufgebaut.

Entsprechend der jeweiligen Funktion kann eine derartige hydraulische Steuerungsvorrichtung in einen Ölversorgungsteil, einen Kupplungsbetätigungsteil und einen Getriebebetätigungsteil untergliedert werden. In dem Ölversorgungsteil wird Drucköl durch eine Pumpe aus einem Ölsumpf gefördert und in einer Hauptdruckleitung mittels eines Hauptdruckventils ein Systemdruck eingestellt, der vorteilhaft belastungsabhängig variiert werden kann. Mittels eines Druckreduzierventils wird in einer Steuerdruck-Versorgungsleitung mit hoher Genauigkeit ein für Steuerungszwecke vorgesehener konstanter Reduzierdruck eingestellt. Mittels eines Volumenstromregelventils kann ein für Kühlungszwecke erforderlicher Kühlölvolumenstrom eingestellt werden.

In dem Kupplungsbetätigungsteil sind zwei Kupplungsventile vorgesehen, durch welche die Arbeitsdrücke in den Kupplungsstellzylindern der beiden Kupplungen gesteuert werden, wodurch die Kupplungen geschlossen oder geöffnet werden. Die beiden Kupplungen können im Prinzip sowohl als Trockenkupplungen als auch als nasslaufende Lamellenkupplungen ausgebildet sein. Vorliegend wird von einem Doppelkupplungsgetriebe mit nasslaufenden Lamellenkupplungen ausgegangen, die gegenüber Trockenkupplungen kompaktere Abmessungen und eine bessere Steuerbarkeit aufweisen, jedoch eine Versorgung mit einem Kühlölvolumenstrom erfordern.

In dem Getriebebetätigungsteil sind mindestens zwei Gangventile, durch welche die Arbeitsdrücke von zwei Druckräumen mehrerer Gangstellzylinder unabhängig voneinander regelbar sind, und mehrere Wahlventile vorgesehen, durch welche die Zuordnung der beiden steuerbaren Arbeitsdrücke auf zwei Druckräume der Gangstellzylinder erfolgt. Die Gangstellzylinder können als einfach wirkende Stellzylinder mit jeweils einem einzigen Druckraum ausgebildet sein, welches zum Ein- und Auslegen von maximal zwei jeweils einer Schaltstange zugeordneten Gängen zwei Gangstellzylinder pro Schaltstange erfordert. Die Gangstellzylinder sind jedoch zumeist als doppeltwirkende Stellzylinder mit jeweils zwei Druckräumen ausgebildet, wodurch zum Ein- und Auslegen von maximal zwei jeweils einer Schaltstange zugeordneten Gängen nur ein Gangstellzylinder pro Schaltstange erforderlich ist.

Die Schalt- und Regelventile können als direkt steuerbare Magnetventile ausgeführt sein und in dieser Bauart unmittelbar über jeweils einen elektrischen Steuerstrom angesteuert werden. Da dies aber entsprechend starke Elektromagnete mit relativ großen Abmessungen und hohem Gewicht sowie hohe elektrische Steuerströme erfordert, sind die Schalt- und Regelventile bevorzugt druckgesteuert ausgebildet und in dieser Bauart durch zumeist als kleinere Magnetventile ausgebildete Vorsteuerventile ansteuerbar.

Eine typische hydraulische Steuerungsvorrichtung eines Doppelkupplungsgetriebes entsprechend dem Oberbegriff des Anspruchs 1 ist in mehreren Ausführungsformen aus der DE 103 47 203 A1 bekannt. In einer ersten Variante dieser Steuerungsvorrichtung gemäß der dortigen Fig. 40 sind ein Hauptdruckventil zur Einstellung eines Systemdrucks und zwei Kupplungsventile zur Einstellung der Arbeitsdrücke in den Kupplungsstellzylindern der Kupplungen als Magnetregelventile ausgebildet. Ein Volumenstromregelventil zur Einstellung eines Kühlölvolumenstroms der beiden Kupplungen ist passiv steuerbar ausgebildet, so dass die Kühlung der Kupplungen nicht gezielt gesteuert werden kann.

Zur Betätigung der als doppeltwirkende Stellzylinder ausgebildeten Gangstellzylinder ist ein einziges Gangregelventil mit zwei steuerbaren Arbeitsdruckleitungen zur Steuerung der Arbeitsdrücke von zwei Druckräumen vorgesehen. Das Gangregelventil ist vorliegend als ein 4/3-Wege-Magnetregelventil ausgebildet. Für die Zuordnung des Gangregelventils zu den Gangstellzylindern beider Teilgetriebe ist eine Multiplexanordnung von einem dem Gangregelventil nachgeschalteten Teilgetriebewahlventil und zwei diesem nachgeschalteten Zylinderwahlventilen vorgesehen. Die Wahlventile sind jeweils als einfach schaltbare 8/2-Wege-Druckschaltventile ausgebildet, wobei die Zylinderwahlventile jeweils den beiden Gangstellzylindern eines Teilgetriebes zugeordnet sind. Durch die Schaltstellung des Teilgetriebewahlventils wird die Zuordnung des Gangregelventils zu einem der beiden Teilgetriebe und durch die Schaltstellung des jeweiligen Zylinderwahlventils die Zuordnung des Gangregelventils zu einem der beiden Gangstellzylinder des betreffenden Teilgetriebes bestimmt.

Für die Ansteuerung des Teilgetriebewahlventils ist diesem ein als ein 3/2-Wege-Magnetschaltventil ausgebildetes Vorsteuerventil vorgeschaltet. Für die Ansteuerung der beiden Zylinderwahlventile ist ein gemeinsames, als ein 3/2-Wege-Magnetschaltventil ausgebildetes Vorsteuerventil vorgesehen. Durch die Verwendung der Multiplexanordnung aus einfach und Platz sparend aufgebauten druckgesteuerten Wahlventilen ergeben sich gewisse Kosten- und Bauraumvorteile. Die Verwendung eines einzigen Gangregelventils ist aber aufgrund der gekoppelten Steuerung der Arbeitsdrücke beider Druckräume mit Funktionseinschränkungen und aufgrund der elektromagnetischen Steuerung mit gewissen Kosten- und Bauraumnachteilen verbunden.

Durch eine druckgesteuerte Ausführung des Hauptdruckventils, des Volumenstromregelventils, der beiden Kupplungsventile und des Gangregelventils gemäß der dortigen Fig. 42 ist zumindest der diesbezügliche Kosten- und Bauraumnachteil behoben. Die betreffenden Steuerventile sind dort jeweils mittels eines zugeordneten, als Magnetregelventil ausgebildeten Vorsteuerventils ansteuerbar. Durch die Verwendung von zwei druckgesteuerten Gangregelventilen gemäß der dortigen Fig. 43 ist die unabhängige Steuerung der Arbeitsdrücke beider Druckräume möglich, wodurch die Steuerungseigenschaften dieser bekannten Steuerungsvorrichtung entsprechend verbessert sind. Die beiden druckgesteuerten Gangregelventile sind dort jeweils über ein zugeordnetes, als Magnetregelventil ausgebildetes Vorsteuerventil ansteuerbar.

Trotz der Kosten- und Bauraumvorteile sowie der Funktionsvorteile der letztgenannten Ausführungsform der bekannten Steuerungsvorrichtung besteht ein genereller Bedarf, weitere Kosten- und Bauraumeinsparungen an einer derartigen Steuerungsvorrichtung vorzunehmen. Vor diesem Hintergrund liegt der vorliegenden Erfindung die Aufgabe zugrunde, eine hydraulische Steuerungsvorrichtung eines automatisierten Doppelkupplungsgetriebes der eingangs genannten Art vorzuschlagen, die ohne Funktionseinschränkungen kostengünstiger und Platz sparender aufgebaut ist.

Eine erste Lösung dieser Aufgabe wird erreicht durch eine hydraulische Steuerungsvorrichtung eines automatisierten Doppelkupplungsgetriebes eines Kraftfahrzeuges, mit einem Ölversorgungsteil, der mindestens ein druckgesteuertes Hauptdruckventil zur Regelung eines Systemdrucks und ein druckgesteuertes Volumenstromregelventil zur Regelung eines Kühlölvolumenstroms aufweist, mit einem Kupplungsbetätigungsteil, der für jede von zwei als aktiv schließbare Lamellenkupplungen ausgebildete Kupplungen ein druckgesteuertes Kupplungsventil zur Steuerung eines zugeordneten Kupplungsstellzylinders aufweist, und mit einem Getriebebetätigungsteil, der mindestens zwei druckgesteuerte Gangventile zur unabhängigen Regelung der Arbeitsdrücke von zwei Druckräumen mehrerer Gangstellzylinder und mehrere druckgesteuerte Wahlventile zur Zuordnung der beiden Gangventile zu den Druckräumen der Gangstellzylinder aufweist, und bei der eine Zwischenventilanordnung zur Ansteuerung des Volumenstromregelventils vorgesehen ist, die eingangsseitig von mindestens einem Arbeitsdruck oder einem Steuerdruck des Kupplungsbetätigungsteils oder des Getriebebetätigungsteils beaufschlagbar ist, und durch die das Volumenstromregelventil über eine ausgangsseitige Steuerdruckleitung im öffnenden Sinn mit einem lastabhängigen Steuerdruck ansteuerbar ist.

Durch die Zwischenventilanordnung wird ein sonst erforderliches, als elektrischer Drucksteller bzw. als Magnetregelventil ausgebildetes Vorsteuerventil zur Ansteuerung des Volumenstromregelventils eingespart. Je nach Ausgestaltung der Zwischenventilanordnung, der steuerungsseitigen Verbindung mit den Arbeitsdruckleitungen oder den Steuerdruckleitungen des Kupplungsbetätigungsteils oder des Getriebebetätigungsteils, sowie der Ausbildung der betreffenden Stellzylinder oder Vorsteuerventile kann die Ansteuerung der Zwischenventilanordnung und damit des Volumenstromregelventils aktiv steuerbar oder passiv steuerbar ausgebildet sein.

Der Ausbildung der entsprechenden Bauteile und Anschlüsse liegt dabei die Erkenntnis zugrunde, dass zur Kühlung der Kupplungen nicht ständig ein hoher Kühlölvolumenstrom erforderlich ist, sondern dass dieser nur bei einem hohen Wärmeeintrag in die Kupplungen benötigt wird. Die Phasen mit hohem Wärmeaufkommen treten aber bekanntlich nur während der Anfahrvorgänge des Kraftfahrzeugs und während der Schaltvorgänge des Doppelkupplungsgetriebes auf, in denen sich zumindest eine der beiden Kupplungen mehr oder weniger lang im Schlupfbetrieb befindet. Außerhalb dieser Phasen ist ein hoher Kühlölvolumenstrom eher schädlich, da er besonders in der geschlossenen Kupplung zu Schleppverlusten und damit zu einer Wirkungsgradverschlechterung der Kraftübertragung führt.

Die Zwischenventilanordnung kann derart ausgebildet sein, dass zwei als Schieberventile ausgebildete druckgesteuerte Vorventile mit jeweils einem Ventilkolben, einer Ventilfeder, einem federabgewandten stirnseitigen Steuerdruckraum, einem federseitigen Rückkopplungsdruckraum und einem beidseitig durch Steuerkanten benachbarter Kolbenbunde des Ventilkolbens begrenzten mittigen Druckraum vorgesehen sind, von denen das erste Vorventil an seinem Steuerdruckraum mit einer Arbeitsdruckleitung oder einer Steuerdruckleitung eines ersten Zweiges des Kupplungsbetätigungsteils oder des Getriebebetätigungsteils, an seinem mittleren Druckraum eingangsseitig mit einer Verbindungsleitung und ausgangsseitig mit der ausgangsseitigen Steuerdruckleitung, und an seinem Rückkopplungsdruckraum mit der ausgangsseitigen Steuerdruckleitung in Verbindung steht, und von denen das zweite Vorventil an seinem Steuerdruckraum mit einer Arbeitsdruckleitung oder einer Steuerdruckleitung eines zweiten Zweiges des Kupplungsbetätigungsteils oder des Getriebebetätigungsteils, an seinem mittleren Druckraum eingangsseitig mit der Steuerdruck-Versorgungsleitung und ausgangsseitig mit der zu dem ersten Vorventil führenden Verbindungsleitung, und an seinem Rückkopplungsdruckraum mit der ausgangsseitigen Steuerdruckleitung in Verbindung steht.

Durch die serielle Anordnung der beiden Vorventile und die Rückkopplung des ausgangsseitigen Steuerdrucks auf beide Vorventile stellt sich in der ausgangsseitigen Steuerdruckleitung ein Steuerdruck ein, der in etwa proportional dem Mittelwert der beiden eingangsseitigen Steuerdrücke ist, die jeweils von einer Arbeitsdruckleitung oder einer Steuerdruckleitung eines Zweiges des Kupplungsbetätigungsteils oder des Getriebebetätigungsteils abgeleitet werden. Demzufolge wird der durch das Volumenstromregelventil eingestellte Kühlölvolumenstrom automatisch dem Lastzustand der Kupplungen oder der Gangstellzylinder angepasst.

In einer zweckmäßigen Ausgestaltung der Zwischenventilanordnung stehen das erste Vorventil an seinem Steuerdruckraum mit der Arbeitsdruckleitung eines der beiden Kupplungsventile und das zweite Vorventil an seinem Steuerdruckraum mit der Arbeitsdruckleitung des anderen Kupplungsventils in Verbindung. Somit stellt sich in der ausgangsseitigen Steuerdruckleitung der Zwischenventilanordnung ein Steuerdruck ein, der in etwa proportional zu dem Mittelwert der Arbeitsdrücke der beiden Kupplungen ist.

Um bei dieser Ausführungsform eine aktive Steuerung des ausgangsseitigen Steuerdruckes zu ermöglichen, ist zweckmäßig vorgesehen, dass die Kupplungsstellzylinder der beiden Kupplungen über zugeordnete Rückstellfedern derart vorgespannt sind, dass die beiden Kupplungsventile jeweils einen unteren Regelbereich zur Ansteuerung der Vorventile und einen oberen Regelbereich zur Ansteuerung der Kupplungsstellzylinder aufweisen.

Hierdurch ist der ausgangsseitige Steuerdruck der Zwischenventilanordnung und damit der Kühlölvolumenstrom im unteren Regelbereich der Kupplungsventile über die zugeordneten Vorsteuerventile jeweils aktiv steuerbar. Nach Überschreiten eines unteren Druckgrenzwertes des oberen Regelbereiches in einer der beiden Arbeitsdruckleitungen erfolgt die Steuerung des ausgangsseitigen Steuerdruckes der Zwischenventilanordnung und damit des Kühlölvolumenstroms zumindest teilweise passiv, nämlich in Abhängigkeit des betreffenden Arbeitsdruckes zur Betätigung der betreffenden Kupplung.

In einer dazu alternativen Ausgestaltungsvarinate der Zwischenventilanordnung stehen das erste Vorventil an seinem Steuerdruckraum mit der Steuerdruckleitung eines der beiden Kupplungsventile und das zweite Vorventil an seinem Steuerdruckraum mit der Steuerdruckleitung des anderen Kupplungsventils in Verbindung.

Dadurch stellt sich bei dieser Ausführungsform in der ausgangsseitigen Steuerdruckleitung der Zwischenventilanordnung ein Steuerdruck ein, der in etwa proportional zu dem Mittelwert der Steuerdrücke der beiden Kupplungsventile ist. Da die Arbeitsdrücke in den Arbeitsdruckleitungen der Kupplungen proportional zu den jeweiligen Steuerdrücken in den Steuerdruckleitungen der Kupplungsventile verlaufen, ergibt sich ein ähnlicher Funktionszusammenhang zwischen einer mittleren Kupplungsbelastung und dem Kühlölvolumenstrom. Die Vorventile der Zwischenventilanordnung müssen hierzu nur auf ein entsprechend niedrigeres Druckniveau ihrer eingangsseitigen Steuerdrücke ausgelegt sein.

Auch bei dieser Ausführungsform der Steuerungsvorrichtung ist eine aktive Steuerung des ausgangsseitigen Steuerdruckes möglich, wenn die beiden Kupplungsventile über ihre Ventilfedern derart vorgespannt sind, dass die beiden Vorsteuerventile der Kupplungsventile jeweils einen unteren Regelbereich zur Ansteuerung der Vorventile und einen oberen Regelbereich zur Ansteuerung der Kupplungsventile aufweisen. Hierdurch ist der ausgangsseitige Steuerdruck der Zwischenventilanordnung und damit der Kühlölvolumenstrom im unteren Regelbereich der Vorsteuerventile jeweils aktiv steuerbar. Nach einem Überschreiten eines unteren Druckgrenzwertes des oberen Regelbereiches in einer der beiden Steuerdruckleitungen erfolgt die Steuerung des ausgangsseitigen Steuerdruckes der Zwischenventilanordnung und damit des Kühlölvolumenstroms zumindest teilweise passiv, nämlich in Abhängigkeit des betreffenden Steuerdruckes zur Ansteuerung des Kupplungsventils, durch das der Arbeitsdruck zur Betätigung der zugeordneten Kupplung eingestellt wird.

In einer alternativen Ausführungsvarinate der Zwischenventilanordnung weist diese drei Wechselventile mit jeweils zwei Eingängen und einem Ausgang auf, wobei die beiden Eingänge des ersten Wechselventils jeweils mit einer Steuerdruckleitung eines anderen der beiden Gangventile verbunden sind, die beiden Eingänge des zweiten Wechselventils jeweils mit einer Schaltdruckleitung einer anderen von zwei Funktionsgruppen von Wahlventilen in Verbindung stehen, die beiden Eingänge des dritten Wechselventils mit den Ausgängen der beiden anderen Wechselventile verbunden sind, und der Ausgang des dritten Wechselventils mit der ausgangsseitigen Steuerdruckleitung in Verbindung stehen.

Durch die Wechselventile, die relativ einfach, Platz sparend und entsprechend kostengünstig sind, wird jeweils der größere der beiden eingangseitigen Drücke auf den Ausgang durchgeschaltet. Hierdurch ergibt sich eine passive Steuerung des ausgangsseitigen Steuerdruckes für das Volumenstromregelventil und damit des Kühlölvolumenstroms in Abhängigkeit des größten Druckes in den Steuerdruckleitungen sowie den Schaltdruckleitungen des Getriebebetätigungsteils. Da während der Schaltungen auch die beiden Kupplungen betätigt und thermisch belastet werden, ergibt sich hieraus eine selbsttätige Anpassung des Kühlölvolumenstroms an die thermische Belastung der Kupplungen.

Eine andere Bauform, welche nicht Inhalt der Erfindung ist, beinhaltet eine hydraulische Steuerungsvorrichtung eines automatisierten Doppelkupplungsgetriebes eines Kraftfahrzeugs mit einem Ölversorgungsteil, der mindestens ein druckgesteuertes Hauptdruckventil zur Regelung eines Systemdrucks und ein druckgesteuertes Volumenstromregelventil zur Regelung eines Kühlölvolumenstroms aufweist, mit einem Kupplungsbetätigungsteil, der für jede von zwei als aktiv schließbare Lamellenkupplungen ausgebildete Kupplungen ein druckgesteuertes Kupplungsventil zur Steuerung eines zugeordneten Kupplungsstellzylinders aufweist, und mit einem Getriebebetätigungsteil, der mindestens zwei druckgesteuerte Gangventile zur unabhängigen Regelung der Arbeitsdrücke von zwei Druckräumen mehrerer Gangstellzylinder und mehrere druckgesteuerte Wahlventile zur Zuordnung der beiden Gangventile zu den Druckräumen der Gangstellzylinder aufweist, und der gemäß der Erfindung dadurch gekennzeichnet ist, dass dem Volumenstromregelventil ein als Magnettaktventil ausgebildetes Vorsteuerventil vorgeschaltet ist.

Mit einem Magnettaktventil, bei dem der in der zugeordneten Steuerdruckleitung eingestellte Steuerdruck proportional zu einer variablen Taktfrequenz oder bei fester Taktfrequenz proportional zu einer variablen Öffnungsrate pro Takt ist, kann gegenüber einem Magnetregelventil eine Kosteneinsparung von bis zu 50% erzielt werden.

Eine weitere Bauform, welche nicht Inhalt der Erfindung ist, beinhaltet eine hydraulische Steuerungsvorrichtung eines automatisierten Doppelkupplungsgetriebes eines Kraftfahrzeugs mit einem Ölversorgungsteil, der mindestens ein druckgesteuertes Hauptdruckventil zur Regelung eines Systemdrucks und ein druckgesteuertes Volumenstromregelventil zur Regelung eines Kühlölvolumenstroms aufweist, mit einem Kupplungsbetätigungsteil, der für jede von zwei als aktiv schließbare Lamellenkupplungen ausgebildete Kupplungen ein druckgesteuertes Kupplungsventil zur Steuerung eines zugeordneten Kupplungsstellzylinders aufweist, und mit einem Getriebebetätigungsteil, der mindestens zwei druckgesteuerte Gangventile zur unabhängigen Regelung der Arbeitsdrücke von zwei Druckräumen mehrerer Gangstellzylinder und mehrere druckgesteuerte Wahlventile zur Zuordnung der beiden Gangventile zu den Druckräumen der Gangstellzylinder aufweist. Diese Steuerungsvorrichtung ist zudem dadurch gekennzeichnet, dass eine zweite Zwischenventilanordnung zur Ansteuerung des Hauptdruckventils vorgesehen ist, die eingangsseitig von mindestens einem Arbeitsdruck oder von einem Steuerdruck des Kupplungsbetätigungsteils oder des Getriebebetätigungsteils beaufschlagbar ist, und durch die das Hauptdruckventil über eine ausgangsseitige Steuerdruckleitung in einem den Systemdruck vergrößernden Sinn mit einem lastabhängigen Steuerdruck ansteuerbar ist.

Durch die zweite Zwischenventilanordnung, wird ein sonst erforderliches, als elektrischer Drucksteller bzw. als Magnetregelventil ausgebildetes Vorsteuerventil zur Ansteuerung des Hauptdruckventils eingespart. Je nach Ausgestaltung der zweiten Zwischenventilanordnung, der steuerungsseitigen Verbindung mit den Arbeitsdruckleitungen oder den Steuerdruckleitungen des Kupplungsbetätigungsteils oder des Getriebebetätigungsteils, sowie der Ausbildung der betreffenden Stellzylinder oder Vorsteuerventile kann die Ansteuerung der zweiten Zwischenventilanordnung und damit des Hauptdruckventils aktiv steuerbar oder passiv steuerbar ausgebildet sein.

Der Ausbildung der entsprechenden Bauteile und Anschlüsse liegt dabei die Erkenntnis zugrunde, dass für den Kupplungsbetätigungsteil und den Getriebebetätigungsteil nicht ständig ein hoher Systemdruck erforderlich ist, sondern dass dieser nur bei einer Betätigung der Kupplungsstellzylinder, also beim Einrücken mindestens einer der beiden Kupplungen, und bei einer Betätigung der Gangstellzylinder, also beim Ein- und Auslegen von Gängen, benötigt wird. Die Phasen mit hohem Systemdruckbedarf sind somit auf Anfahr- und Schaltvorgänge beschränkt. Außerhalb dieser Phasen ist ein hoher Systemdruck eher schädlich, da dieser eine große Antriebsleistung der Pumpe erfordert sowie höhere Leckageverluste verursacht und damit zu einer Wirkungsgradverschlechterung des Antriebsstrangs führt.

Die zweite Zwischenventilanordnung umfasst zweckmäßig drei Wechselventile mit jeweils zwei Eingängen und einem Ausgang, wobei die beiden Eingänge des ersten Wechselventils mit jeweils einer Funktionsleitung eines Zweiges des Getriebebetätigungsteils, die beiden Eingänge des zweiten Wechselventils mit jeweils einer Funktionsleitung eines Zweiges des Kupplungsbetätigungsteils, die beiden Eingänge des dritten Wechselventils mit den Ausgängen der beiden anderen Wechselventile und der Ausgang des dritten Wechselventils mit der ausgangsseitigen Steuerdruckleitung verbunden ist.

Durch die relativ einfachen und kostengünstigen Wechselventile wird jeweils der größere der beiden eingangseitigen Drücke auf den Ausgang durchgeschaltet. Hierdurch ergibt sich eine passive Steuerung des ausgangsseitigen Steuerdruckes und damit des Systemdrucks in Abhängigkeit vom größten Druck in den Arbeitsdruckleitungen oder den Steuerdruckleitungen des Kupplungsbetätigungsteils und/oder des Getriebebetätigungsteils. Da während einer Kupplungsbetätigung und während einer Schaltung die entsprechenden Arbeits- oder Steuerdrücke entsprechend hoch sind, ergibt sich hieraus vorteilhaft eine selbsttätige Anpassung des Systemdruckes an den aktuellen Bedarf.

In einer ersten zweckmäßigen Ausgestaltung der zweiten Zwischenventilanordnung sind die beiden Eingänge des ersten Wechselventils jeweils mit einer Arbeitsdruckleitung eines anderen der beiden Gangventile und die beiden Eingänge des zweiten Wechselventils jeweils mit einer Arbeitsdruckleitung eines anderen der beiden Kupplungsventile verbunden. Somit erfolgt eine Erhöhung des Systemdruckes entsprechend dem höchsten Arbeitsdruck in einer der vier Arbeitsdruckleitungen des Kupplungsbetätigungsteils und des Getriebebetätigungsteils.

Alternativ dazu ist in einer zweiten Ausgestaltung der zweiten Zwischenventilanordnung vorgesehen, dass die beiden Eingänge des ersten Wechselventils jeweils mit einer Steuerdruckleitung eines anderen der beiden Gangventile und die beiden Eingänge des zweiten Wechselventils jeweils mit einer Steuerdruckleitung eines anderen der beiden Kupplungsventile verbunden sind. Bei dieser Ausführungsform der Erfindung wird mit an sich gleicher Funktionalität der Systemdruck entsprechend dem höchsten Steuerdruck in einer der vier Steuerdruckleitungen des Kupplungsbetätigungsteils und des Getriebebetätigungsteils erhöht. Hierzu muss das Hauptdruckventil zur Erzielung eines ähnlichen Funktionszusammenhangs nur auf das entsprechend niedrigere Druckniveau in der ausgangsseitigen Steuerdruckleitung abgestimmt sein.

Bei allen vorbeschriebenen Ausführungsformen der hydraulischen Steuerungsvorrichtung können weitere Kosten- und Bauraumeinsparungen dadurch erzielt werden, dass mehrere als Magnetventile ausgebildete Vorsteuerventile des Ölversorgungsteils und/oder des Kupplungsbetätigungsteils und/oder des Getriebebetätigungsteils ein gemeinsames Ventilgehäuse aufweisen. Durch die Verwendung eines oder mehrerer derartiger Ventilblöcke werden separate Gehäuse und separate Anschlüsse der Steuerdruck-Versorgungsleitung für jedes Vorsteuerventil vermieden.

Zur Verdeutlichung der Erfindung ist der Beschreibung eine Zeichnung mit Ausführungsbeispielen beigefügt. In diesen zeigt
- Fig. 1: eine erste Ausführungsvariante einer erfindungsgemäßen hydraulischen Steuerungsvorrichtung eines automatisierten Doppelkupplungsgetriebes in Form eines schematischen Schaltplans,
- Fig. 2: eine zweite Ausführungsvarinate dargestellt wie in Fig. 1,
- Fig. 3: eine dritte Ausführungsvariante welche nicht Inhalt der Erfindung ist dargestellt wie in Fig. 1,
- Fig. 4: eine vierte Ausführungsvariante welche nicht Inhalt der Erfindung ist dargestellt wie in Fig. 1,
- Fig. 5: eine fünfte Ausführungsvariante welche nicht Inhalt der Erfindung ist dargestellt wie in Fig. 1,
- Fig. 6: eine sechste Ausführungsvariante welche nicht Inhalt der Erfindung ist dargestellt wie in Fig. 1,
- Fig. 7: eine bekannte hydraulische Steuerungsvorrichtung eines automatisierten Doppelkupplungsgetriebes in Form eines schematischen Schaltplans,
- Fig. 8: eine erfindungsgemäße Ausführungsform eines Magnetsteuerventils einer Steuerungsvorrichtung in einer Schnittansicht, und
- Fig. 9: Einzelteile eines Magnetsteuerventils gemäß Fig. 8 in einer perspektivischen Explosionsdarstellung.

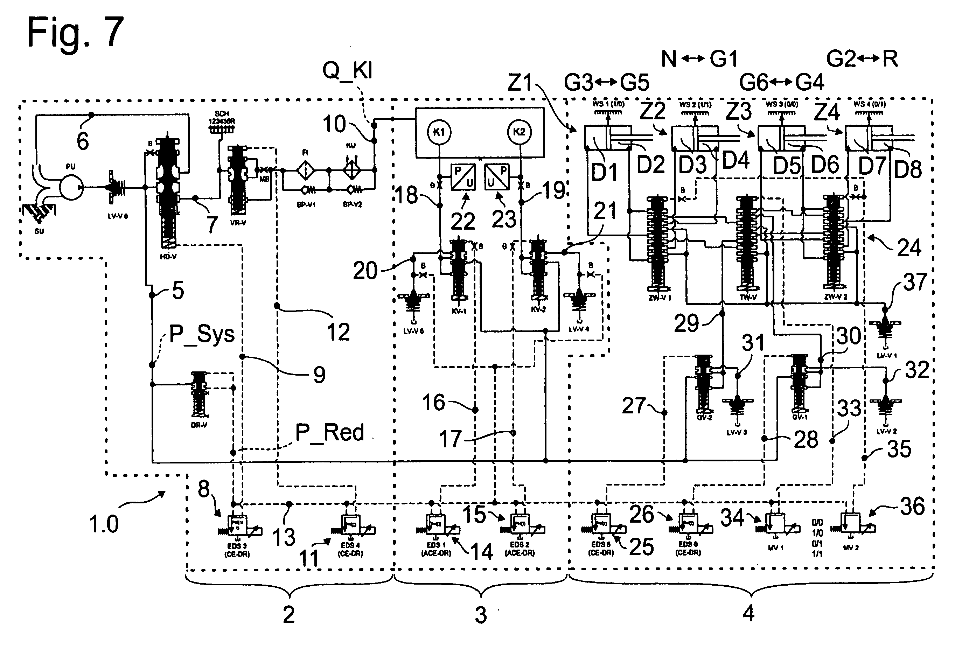

Eine bekannte hydraulische Steuerungsvorrichtung 1.0 eines Doppelkupplungsgetriebes, die weitgehend einer in der DE 103 47 203 A1 nach der dortigen Fig. 43 beschriebenen Ausführungsform einer Steuerungsvorrichtung entspricht und in Fig. 7 dargestellt ist, kann entsprechend ihrer Teilfunktionen in ein Ölversorgungsteil 2, ein Kupplungsbetätigungsteil 3, und ein Getriebebetätigungsteil 4 untergliedert werden.

In dem Ölversorgungsteil 2 ist eine Pumpe PU vorgesehen, mittels der Drucköl aus einem Ölsumpf SU über ein Leerlaufverhinderungsventil LV-V6 in eine Hauptdruckleitung 5 förderbar ist. Zur Einstellung eines variablen Systemdrucks P_Sys ist ein als Öffner ausgebildetes druckgesteuertes Hauptdruckventil HD-V an die Hauptdruckleitung 5 angeschlossen. Über das Hauptdruckventil HD-V, das vorliegend als ein Schieberventil mit einem Ventilkolben und einer Ventilfeder ausgebildet ist, wird, abhängig von der Höhe des eingestellten Systemdruckes P_Sys, mehr oder weniger viel Drucköl über eine Rückflussleitung 6 zurück in den Ölsumpf SU geleitet und/oder über eine Sekundärdruckleitung 7 für Schmier- und Kühlungszwecke abgeführt.

Durch eine mittels einer Blende B gedrosselte Rückführung des Systemdruckes P_Sys in einen von der Ventilfeder abgewandten stirnseitigen Steuerdruckraum wird der Ventilkolben selbsttätig in einer mittleren Stellung gehalten, in welcher in der Hauptdruckleitung 5 ein bestimmter, relativ kleiner Systemdruck P_Sys eingestellt ist und ein gewisser Teil des von der Pumpe PU geförderten Drucköls in die Sekundärdruckleitung 7 geleitet wird.

Mittels eines zugeordneten, vorliegend als ein elektrischer Drucksteller EDS3 ausgebildeten Vorsteuerventils 8, dessen Steuerdruckleitung 9 mit dem federseitigen stirnseitigen Steuerdruckraum des Hauptdruckventils HD-V verbunden ist, kann der Systemdruck P_Sys bedarfsweise unter einer Reduzierung des in die Sekundärdruckleitung 7 durchgeleiteten Ölvolumenstroms erhöht werden. Bei vollständig geschlossenem Hauptdruckventil HD-V stellt sich in der Hauptdruckleitung 5 ein maximal möglicher Systemdruck P_Sys ein.

An die Sekundärdruckleitung 7 ist ein als Schließer ausgebildetes druckgesteuertes Volumenstromregelventil VR-V angeschlossen. Über das Volumenstromregelventil VR-V, das vorliegend als ein Schieberventil mit einem Ventilkolben und einer Ventilfeder ausgebildet ist, wird ein steuerbarer Kühlölvolumenstrom Q_KI über eine Kühlölleitung 10 zu den als nasslaufende Lamellenkupplungen ausgebildeten Kupplungen K1, K2 des Doppelkupplungsgetriebes geleitet. Der Kühlölvolumenstrom Q_Kl wird dabei über eine Messblende MB, einen Filter Fl und einen Kühler KU geführt, wobei der Filter Fl und der Kühler KU bei einer Verstopfung jeweils über ein Bypassventil BP-V1, BP-V2 überbrückbar sind. Durch eine Rückführung des vor der Messblende MB wirksamen Druckes in einen der Ventilfeder abgewandten stirnseitigen Steuerdruckraum und des nach der Messblende MB wirksamen Druckes in einen federseitigen stirnseitigen Steuerdruckraum des Volumenstromregelventils VR-V wird der Ventilkolben selbsttätig in einer mittleren Stellung gehalten, in der ein bestimmter Kühlölvolumenstrom Q_Kl in die Kühlölleitung 10 geleitet wird.

Mittels eines zugeordneten, vorliegend als ein elektrischer Drucksteller EDS4 ausgebildeten Vorsteuerventils 11, dessen Steuerdruckleitung 12 mit einem federabgewandten stirnseitigen Steuerdruckraum des Volumenstromregelventils VR-V verbunden ist, kann der Kühlölvolumenstrom Q_KI bedarfsweise reduziert werden. Bei vollständig geschlossenem Volumenstromregelventil VR-V ist die Kühlölleitung 10 vollständig von der Sekundärdruckleitung 7 getrennt und damit der zu den Kupplungen K1, K2 fließende Kühlölvolumenstrom Q_KI gleich Null.

An die Hauptdruckleitung 5 ist des Weiteren ein als Schließer ausgebildetes druckgesteuertes Druckreduzierventil DR-V angeschlossen. Über das Druckreduzierventil DR-V, das vorliegend als ein Schieberventil mit einem Ventilkolben und einer Ventilfeder ausgebildet ist, wird in einer ausgangsseitig angeschlossenen Steuerdruck-Versorgungsleitung 13 ein für Steuerungszwecke vorgesehener Reduzierdruck P_Red eingestellt. Durch eine Rückführung des Reduzierdruckes P_Red in einen von der Ventilfeder abgewandten stirnseitigen Steuerdruckraum erfolgt die Regelfunktion des Druckreduzierventils DR-V selbsttätig auf einen weitgehend konstanten Wert des Reduzierdruckes P_Red.

Das Vorsteuerventil 8 des Hauptdruckventils HD-V und das Vorsteuerventil 11 des Volumenstromregelventils VR-V sind jeweils eingangsseitig an die Steuerdruck-Versorgungsleitung 13 angeschlossen, so dass der durch die Vorsteuerventile 8 und 11 in den zugeordneten Steuerdruckleitungen 9 bzw. 12 einstellbare Steuerdruck zwischen Null und dem Reduzierdruck P_Red variieren kann.

In dem Kupplungsbetätigungsteil 3 ist jeweils für jede der beiden Kupplungen K1 und K2 ein druckgesteuertes Kupplungsventil KV-1, KV-2 vorgesehen. Vorliegend sind die beiden Kupplungsventile KV-1, KV-2 jeweils als ein Schieberventil mit einem Ventilkolben und einer Ventilfeder ausgebildet. Jedem Kupplungsventil KV-1, KV-2 ist ein jeweils als ein elektrischer Drucksteller (EDS1, EDS2) ausgebildetes Vorsteuerventil 14 bzw. 15 zugeordnet, die jeweils an die Steuerdruck-Versorgungsleitung 13 angeschlossen sind. Die beiden Kupplungsventile KV-1, KV-2 stehen jeweils an einem von der Ventilfeder abgewandten stirnseitigen Steuerdruckraum über jeweils eine Steuerdruckleitung 16 bzw. 17 sowie zwischengeschaltete Blenden B mit dem jeweiligen Vorsteuerventil 14 bzw. 15 in Verbindung.

Die in Fig. 7 nicht explizit dargestellten Kupplungsstellzylinder der beiden Kupplungen K1, K2 stehen jeweils über eine Arbeitsdruckleitung 18 bzw. 19 mit einem mittleren Druckraum des jeweils zugeordneten Kupplungsventils KV-1, KV-2 in Verbindung, der jeweils steuerbar über die Steuerkante eines federseitig benachbarten Kolbenbundes des Ventilkolbens mit der Hauptdruckleitung 5 und über die Steuerkante eines federabgewandt benachbarten Kolbenbundes des Ventilkolbens mit einer Drucklosleitung 20, 21 verbindbar ist.

Somit wird ein in dem jeweiligen Vorsteuerventil 14 bzw. 15 über einen elektrischen Steuerstrom in der betreffenden Steuerdruckleitung 16, 17 eingestellter Steuerdruck in dem zugeordneten Kupplungsventil KV-1, KV-2 proportional in einen Arbeitsdruck umgesetzt, der über die jeweilige Arbeitsdruckleitung 18 bzw. 19 in den Druckraum des zugeordneten Kupplungsstellzylinders der betreffenden Kupplung K1 bzw. K2 geleitet wird. Dabei wird die Kupplung K1 bzw. K2 durch einen hohen Arbeitsdruck geschlossen und durch eine Drucklosschaltung geöffnet wird.

Zur Vermeidung eines Leerlaufens der Arbeitsdruckleitungen 18, 19 und der daran angeschlossenen Druckräume der Kupplungsstellzylinder stehen die beiden Drucklosleitungen 20, 21 jeweils über ein Leerlaufverhinderungsventil LV-V4, LV-V5 mit dem Ölsumpf SU und über eine Blende B mit der Steuerdruck-Versorgungsleitung 13 in Verbindung. An die beiden Arbeitsdruckleitungen 18, 19 ist jeweils kupplungsseitig von einer eingebauten Blende B ein Drucksensor 22 bzw. 23 zur steuerungstechnischen Rückmeldung des in dem Druckraum des betreffenden Kupplungsstellzylinders wirksamen Arbeitsdruckes angeschlossen.

Der Getriebebetätigungsteil 4 der hydraulischen Steuerungsvorrichtung 1.0 umfasst vier doppeltwirkende Gangstellzylinder Z1 - Z4 mit jeweils zwei Druckräumen D1 - D8 zum Ein- und Auslegen zugeordneter Gänge G1 - G6 und R, zwei druckgesteuerte Gangregelventile GV-1 und GV-2 zur Regelung des Arbeitsdruckes in zwei der Druckräume D1 - D8, und eine Multiplexanordnung 24 mit einem druckgesteuerten Teilgetriebewahlventil TW-V und zwei druckgesteuerten Zylinderwahlventilen ZW-V1, ZW-V2 zur selektiven Zuordnung der beiden Gangregelventile GV-1 bzw. GV-2 zu zwei der acht Druckräume D1 - D8.

Dem ersten Gangstellzylinder Z1 sind der dritte Gang G3 und der fünfte Gang G5 zugeordnet, wobei durch eine Druckbeaufschlagung des ersten Druckraums D1 und eine Drucklosschaltung des zweiten Druckraums D2 der dritte Gang G3 ausgelegt und der fünfte Gang G5 eingelegt wird. Umgekehrt wird durch eine Druckbeaufschlagung des zweiten Druckraums D2 und eine Drucklosschaltung des ersten Druckraums D1 der fünfte Gang G5 ausgelegt und der dritte Gang G3 eingelegt. Dem zweiten Gangstellzylinder Z2 mit dem dritten Druckraum D3 und dem vierten Druckraum D4 sind der erste Gang G1 und die Neutralstellung N des Getriebes zugeordnet, wobei die Wirkrichtung der Druckräume D3 und D4 analog dem ersten Gangstellzylinder Z1 durch einen Doppelpfeil mit einer Angabe der endseitigen Schaltstellungen gegeben ist.

Der vierte Gang G4 und der sechste Gang G6 sind über den dritten Gangstellzylinder Z3 mit dem fünften Druckraum D5 und dem sechsten Druckraum D6 ein- und auslegbar, wobei die Wirkrichtung der Druckräume D5, D6 ebenfalls durch den zugeordneten Doppelpfeil angegeben ist. Dem vierten Gangstellzylinder Z4 mit dem siebten Druckraum D7 und dem achten Druckraum D8 sind der zweite Gang G2 und der Rückwärtsgang R mit der durch den zugeordneten Doppelpfeil angegebenen Wirkrichtung der Druckräume D7, D8 zugeordnet.

Die ersten beiden Gangstellzylinder Z1 und Z2 mit den ungeraden Gängen G1, G3, G5 und der Neutralstellung N sind einem ersten Teilgetriebe des Doppelkupplungsgetriebes und die letzten beiden Gangstellzylinder Z3 sowie Z4 mit den geraden Gängen G2, G4, G6 und dem Rückwärtsgang sind einem zweiten Teilgetriebe des Doppelkupplungsgetriebes zugeordnet. Die Positionen der Kolben der Gangstellzylinder Z1 bis Z4 und damit der mit diesen verbundenen Schaltstangen des Doppelkupplungsgetriebes werden über jeweils einen Wegsensor WS1 bis WS4 erfasst.

Die beiden Gangventile GV-1 und GV-2 sind jeweils als ein Schieberventil mit einem Ventilkolben und einer Ventilfeder ausgebildet. Jedem Gangventil GV-1, GV-2 ist ein vorliegend jeweils ein als elektrischer Drucksteller (EDS5, EDS6) ausgebildetes Vorsteuerventil 25, 26 zugeordnet, das jeweils an die Steuerdruck-Versorgungsleitung 13 angeschlossen ist. Die beiden Gangventile GV-1 und GV-2 stehen jeweils an einem von der Ventilfeder abgewandten stirnseitigen Steuerdruckraum über jeweils eine Steuerdruckleitung 27, 28 mit dem zugeordneten Vorsteuerventil 25, 26 in Verbindung. Jeweils eine Arbeitsdruckleitung 29, 30 ist an einen mittleren Druckraum jedes der beiden Gangventile GV-1, GV-2 angeschlossen, wobei der Druckraum jeweils steuerbar über die Steuerkante eines federseitig benachbarten Kolbenbundes des Ventilkolbens mit der Hauptdruckleitung 5 und über die Steuerkante eines federabgewandt benachbarten Kolbenbundes des Ventilkolbens mit einer Drucklosleitung 31 bzw. 32 verbindbar ist. Die beiden Drucklosleitungen 31, 32 stehen über jeweils ein Leerlaufverhinderungsventil LV-V2, LV-V3 mit einem Ölsumpf in Verbindung. Somit wird über einen elektrischen Steuerstrom in dem jeweiligen Vorsteuerventil 25, 26 in den betreffenden Steuerdruckleitungen 27, 28 ein Steuerdruck eingestellt, welcher in dem zugeordneten Gangventil GV-1, GV-2 proportional in einen in der jeweiligen Arbeitsdruckleitung 29, 30 wirksamen Arbeitsdruck umgesetzt wird.

Die Arbeitsdruckleitungen 29, 30 der Gangventile GV-1, GV-2 führen zu jeweils einem mittigen Druckraum des Teilgetriebewahlventils TW-V. Das Teilgetriebewahlventil TW-V ist als ein einfach schaltbares Schieberventil mit einem Ventilkolben und einer Ventilfeder ausgebildet. An einem von der Ventilfeder abgewandten stirnseitigen Steuerdruckraum steht das Teilgetriebewahlventil TW-V über eine Schaltdruckleitung 33 mit einem als Magnetventil (MV1) ausgebildeten Vorsteuerventil 34 in Verbindung. Durch eine Betätigung, also Umschaltung des zugeordneten Vorsteuerventils 34 wird das Teilgetriebewahlventil TW-V umgeschaltet.

Im nicht-umgeschalteten Zustand des Teilgetriebewahlventils TW-V sind die beiden Arbeitsdruckleitungen 29, 30 der Gangventile GV-1, GV-2 über zugeordnete Verbindungsleitungen mit jeweils einem mittleren Druckraum des zweiten Zylinderwahlventils ZW-V2 verbunden. Im umgeschalteten Zustand des Teilgetriebewahlventils TW-V sind die beiden Arbeitsdruckleitungen 29, 30 der Gangventile GV-1, GV-2 über andere Verbindungsleitungen mit jeweils einem mittleren Druckraum des ersten Zylinderwahlventils ZW-V1 verbunden.

Die beiden Zylinderwahlventile ZW-V1, ZW-V2 sind jeweils als einfach schaltbare Schieberventile mit einem Ventilkolben und einer Ventilfeder ausgebildet. An jeweils einem der Ventilfeder abgewandten stirnseitigen Steuerdruckraum stehen beide Zylinderwahlventile ZW-V1, ZW-V2 über jeweils eine Blende B und eine gemeinsame Schaltdruckleitung 35 mit einem als Magnetventil (MV2) ausgebildeten Vorsteuerventil 36 in Verbindung. Durch eine Betätigung, also Umschaltung des zugeordneten Vorsteuerventils 36 werden die beiden Zylinderwahlventile ZW-V1, ZW-V2 gleichzeitig umgeschaltet.

Im nicht-umgeschalteten Zustand der Zylinderwahlventile ZW-V1, ZW-V2 sind die betreffenden Verbindungsleitungen des ersten Zylinderwahlventils ZW-V1 mit den Druckräumen D1, D2 des ersten Gangstellzylinders Z1 und die betreffenden Verbindungsleitungen des zweiten Zylinderwahlventils ZW-V2 mit den Druckräumen D5, D6 des dritten Gangstellzylinders Z3 verbunden. Im umgeschalteten Zustand der Zylinderwahlventile ZW-V1, ZW-V2 sind die betreffenden Verbindungsleitungen des ersten Zylinderwahlventils ZW-V1 mit den Druckräumen D3, D4 des zweiten Gangstellzylinders Z2 und die betreffenden Verbindungsleitungen des zweiten Zylinderwahlventils ZW-V2 mit den Druckräumen D7, D8 des vierten Gangstellzylinders Z4 verbunden.

Somit wird durch den Schaltzustand des Teilgetriebewahlventils TW-V die Zuordnung der Gangventile GV-1, GV-2 bzw. deren Arbeitsdruckleitungen 29, 30 zu einem der beiden Teilgetriebe des Doppelkupplungsgetriebes und durch den Schaltzustand der Zylinderwahlventile ZW-V1, ZW-V2 jeweils die Zuordnung zu einem der Gangstellzylinder Z1, Z2 bzw. Z3, Z4 innerhalb des betreffenden Teilgetriebes bestimmt. An allen Wahlventilen TW-V, ZW-V1, ZW-V2 sind jeweils zwei Anschlüsse einer Drucklosleitung vorhanden, die über eine Sammelleitung 37 und ein Leerlaufverhinderungsventil LV-V1 zu einem Ölsumpf geführt werden.

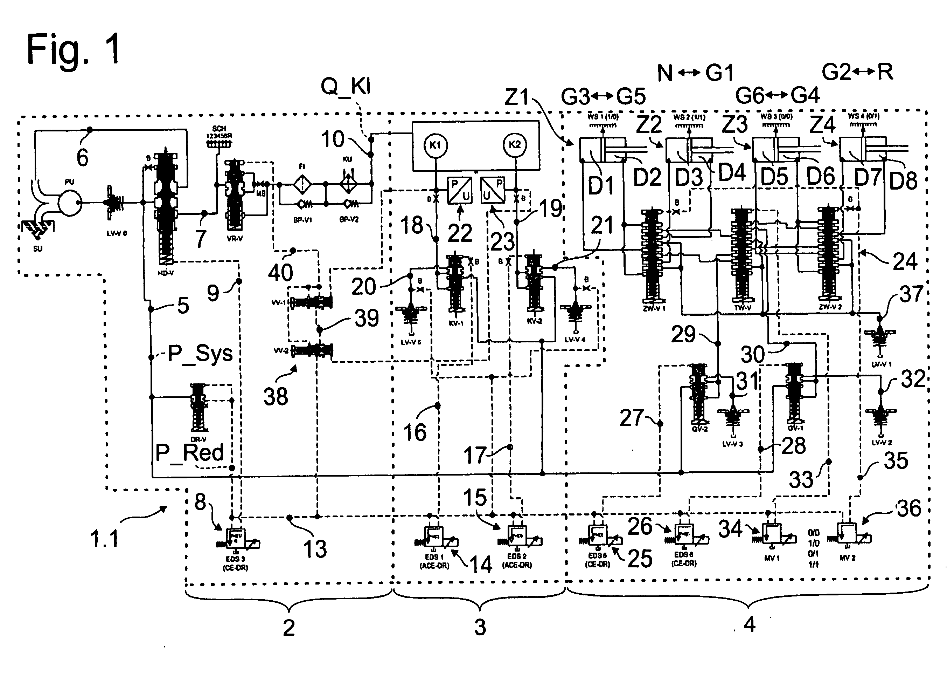

Eine erste Ausführungsvariante einer erfindungsgemäßen hydraulischen Steuerungsvorrichtung 1.1 gemäß Fig. 1 unterscheidet sich von der bekannten Steuerungsvorrichtung 1.0 nach Fig. 7 dadurch, dass zur Ansteuerung des Volumenstromregelventils VR-V anstelle des als elektrischer Drucksteller (EDS4) ausgebildeten Vorsteuerventils 11 nunmehr eine Zwischenventilanordnung 38 vorgesehen ist. Diese Zwischenventilanordnung 38 umfasst zwei als Schieberventile ausgebildete druckgesteuerte Vorventile VV-1, VV-2 mit jeweils einem Ventilkolben, einer Ventilfeder, einem federabgewandten stirnseitigen Steuerdruckraum, einem federseitigen Rückkopplungsdruckraum und einem beidseitig durch Steuerkanten benachbarter Kolbenbunde des Ventilkolbens begrenzten mittigen Druckraum.

Das erste Vorventil VV-1 steht an seinem Steuerdruckraum mit der Arbeitsdruckleitung 18 des ersten Kupplungsventils KV-1, an seinem mittleren Druckraum eingangsseitig mit einer Verbindungsleitung 39 und ausgangsseitig mit einer ausgangsseitigen Steuerdruckleitung 40 sowie an seinem federseitigen Rückkopplungsdruckraum mit der ausgangsseitigen Steuerdruckleitung 40 in Verbindung.

Das zweite Vorventil VV-2 steht an seinem Steuerdruckraum mit der Arbeitsdruckleitung 19 des zweiten Kupplungsventils KV-2, an seinem mittleren Druckraum eingangsseitig mit der Steuerdruck-Versorgungsleitung 13 und ausgangsseitig mit der zu dem ersten Vorventil VV-1 führenden Verbindungsleitung 39 sowie an seinem federseitigen Rückkopplungsdruckraum mit der ausgangsseitigen Steuerdruckleitung 40 in Verbindung. Somit stellt sich in der ausgangsseitigen Steuerdruckleitung 40 ein Steuerdruck zur Ansteuerung des Volumenstromregelventils VR-V ein, der sich in etwa proportional zu dem Mittelwert der Arbeitsdrücke in den beiden Arbeitsdruckleitungen 18 bzw. 19 des Kupplungsbetätigungsteils 3 verhält.

Zur Ermöglichung einer aktiven Steuerung dieses ausgangsseitigen Steuerdruckes sind die Kupplungsstellzylinder der beiden Kupplungen K1, K2 über nicht dargestellte, zugeordnete Rückstellfedern zweckmäßig derart vorgespannt, dass die beiden Kupplungsventile KV-1, KV-2 jeweils einen unteren Regelbereich zur Ansteuerung der Vorventile VV-1, VV-2 und einen oberen Regelbereich zur Ansteuerung der Kupplungsstellzylinder aufweisen.

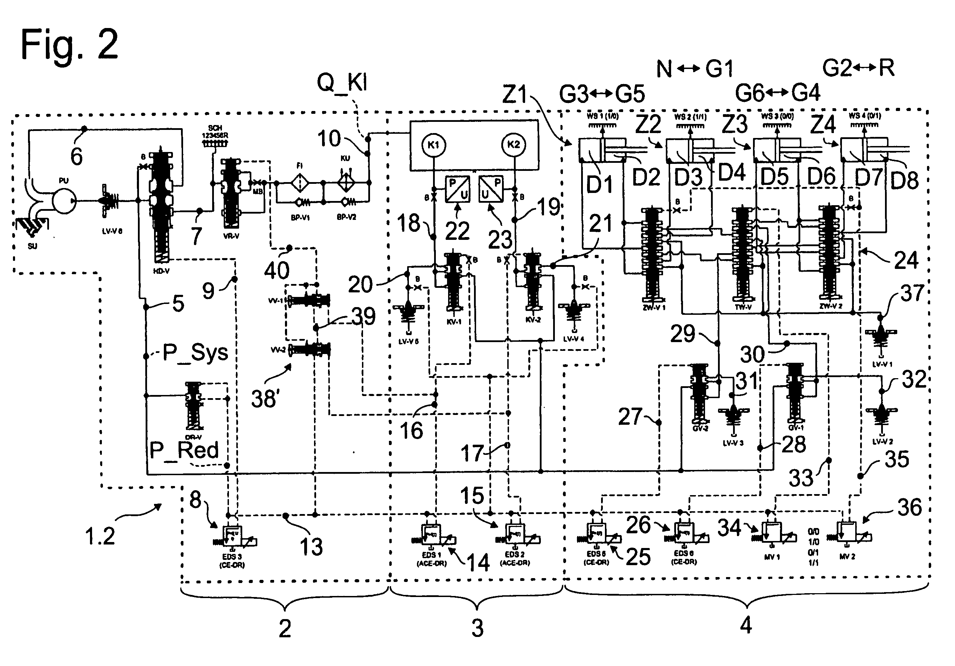

In einer zweiten Ausführungsform der erfindungsgemäßen hydraulischen Steuerungsvorrichtung 1.2 gemäß Fig. 2 ist zur Ansteuerung des Volumenstromregelventils VR-V ebenfalls anstelle des als elektrischer Drucksteller (EDS4) ausgebildeten Vorsteuerventils 11 nach Fig. 7 eine Zwischenventilanordnung 38' vorgesehen, die weitgehend der Zwischenventilanordnung 38 gemäß Fig. 1 entspricht. Im Unterschied dazu stehen nunmehr jedoch das erste Vorventil VV-1 an seinem Steuerdruckraum mit der Steuerdruckleitung 16 des ersten Kupplungsventils KV-1 und das zweite Vorventil W-2 an seinem Steuerdruckraum mit der Steuerdruckleitung 17 des zweiten Kupplungsventils KV-2 in Verbindung. Somit stellt sich in der ausgangsseitigen Steuerdruckleitung 40 ein Steuerdruck zur Ansteuerung des Volumenstromregelventils VR-V ein, der sich in etwa proportional zu dem Mittelwert der Steuerdrücke in den beiden Steuerdruckleitungen 16, 17 des Kupplungsbetätigungsteils 3 verhält.

Zur Ermöglichung einer aktiven Steuerung dieses ausgangsseitigen Steuerdruckes sind die beiden Kupplungsventile KV-1, KV-2 über zugeordnete Ventilfedern zweckmäßig derart vorgespannt, dass die den Kupplungsventilen KV-1, KV-2 vorgeschalteten Vorsteuerventile 14, 15 jeweils einen unteren Regelbereich zur Ansteuerung der Vorventile VV-1, VV-2 und einen oberen Regelbereich zur Ansteuerung der Kupplungsventile KV-1, KV-2 aufweisen.

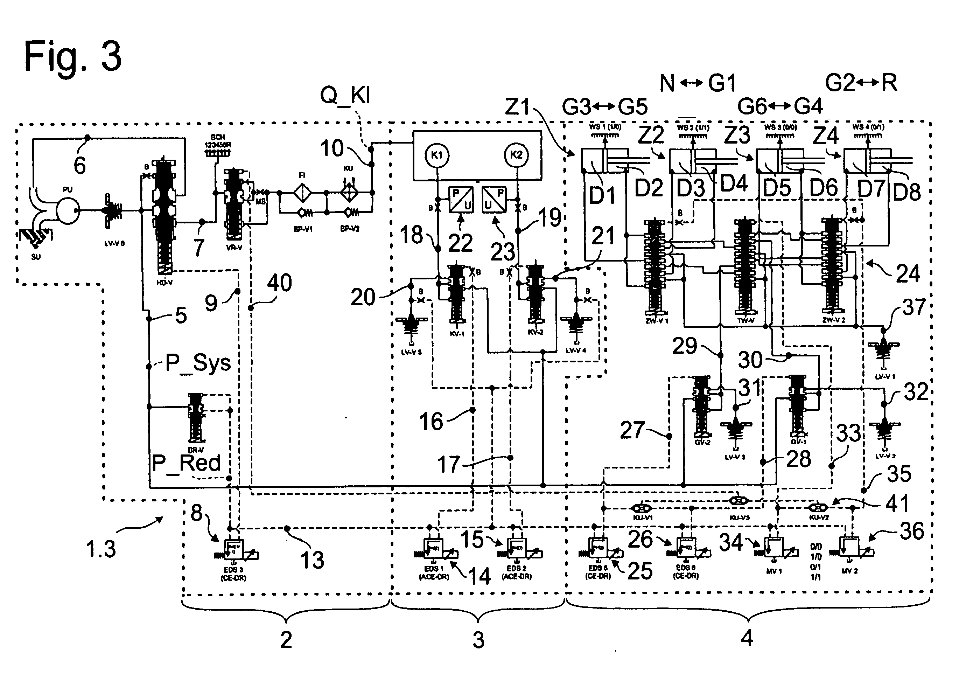

Eine dritte Ausführungsform der erfindungsgemäßen hydraulischen Steuerungsvorrichtung 1.3 ist in Fig. 3 dargestellt. Diese unterscheidet sich von der bekannten Steuerungsvorrichtung 1.0 gemäß Fig. 7 dadurch, dass zur Ansteuerung des Volumenstromregelventils VR-V anstelle des Vorsteuerventils 11 eine Zwischenventilanordnung 41 vorgesehen ist, die sich von den Zwischenventilanordnungen 38 und 38' der beiden ersten Ausführungen nach Fig. 1 und Fig. 2 erkennbar unterscheidet.

Die vorliegende Zwischenventilanordnung 41 umfasst drei Wechselventile KU-V1, KU-V2, KU-V3 mit jeweils zwei Eingängen und einem Ausgang. Die beiden Eingänge des ersten Wechselventils KU-V1 sind jeweils mit der Steuerdruckleitung 27, 28 des ersten Gangventils GV-1 bzw. des zweiten Gangventils GV-2 verbunden, die beiden Eingänge des zweiten Wechselventils KU-V2 stehen jeweils mit der Schaltdruckleitung 33, 35 des Teilgetriebewahlventils TW-V bzw. der beiden Zylinderwahlventile ZW-V1, ZW-V2 in Verbindung, die beiden Eingänge des dritten Wechselventils KU-V3 sind mit den Ausgängen der beiden anderen Wechselventile KU-V1 sowie KU-V2 verbunden, und der Ausgang des dritten Wechselventils KU-V3 mit der ausgangsseitigen Steuerdruckleitung 40 verbunden, die zu dem Volumenstromregelventil VR-V führt.

Durch die Wechselventile KU-V1, KU-V2, KU-V3, die relativ einfach, Platz sparend und entsprechend kostengünstig sind, wird jeweils der größere der beiden eingangseitigen Drücke auf den Ausgang durchgeschaltet. Hierdurch ergibt sich eine passive Steuerung des in der ausgangsseitigen Steuerdruckleitung 40 wirksamen Steuerdruckes und damit des durch das Volumenstromregelventil VR-V eingestellten Kühlölvolumenstroms Q-Kl in Abhängigkeit von dem größten Druck in den Steuerdruckleitungen 27, 28 und den Schaltdruckleitungen 33, 35 des Getriebebetätigungsteils 4.

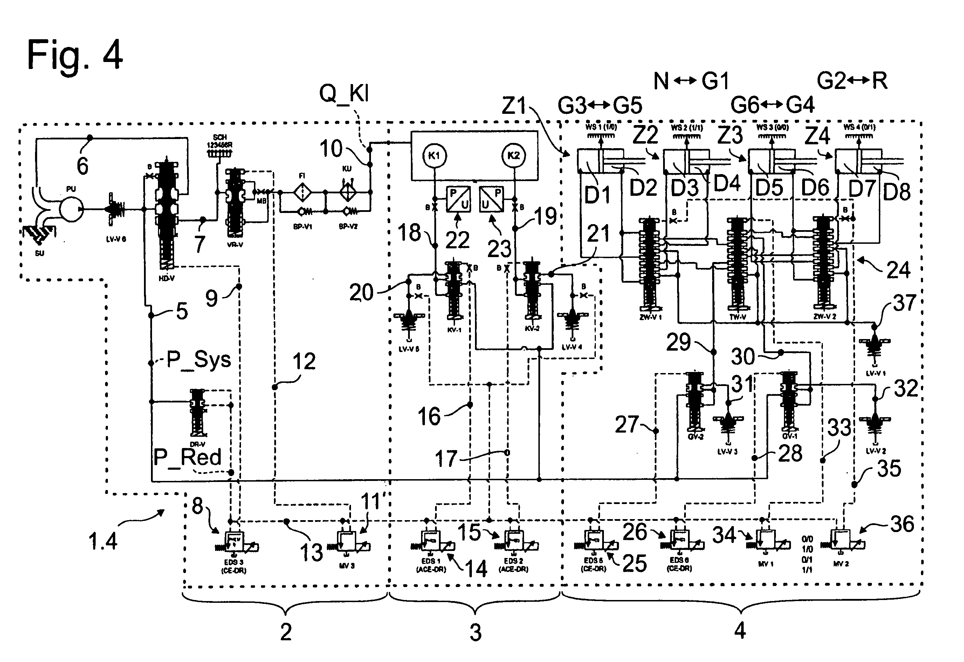

Eine vierte Ausführungsvariante einer hydraulischen Steuerungsvorrichtung 1.4 gemäß Fig. 4 welche nicht Inhalt der Erfindung ist unterscheidet sich von der bekannten Steuerungsvorrichtung 1.0 nach Fig. 7 dadurch, dass zur Ansteuerung des Volumenstromregelventils VR-V anstelle des als elektrischer Drucksteller (EDS4) ausgebildeten Vorsteuerventils 11 nunmehr ein als ein Magnettaktventil (MV3) ausgebildetes Vorsteuerventil 11' vorgesehen ist. Bei dem relativ preisgünstigen Magnettaktventil (MV3) wird der in der Steuerdruckleitung 12 eingestellte Steuerdruck proportional zu einer variablen Taktfrequenz oder bei fester Taktfrequenz proportional einer variablen Öffnungsrate pro Takt eingestellt.

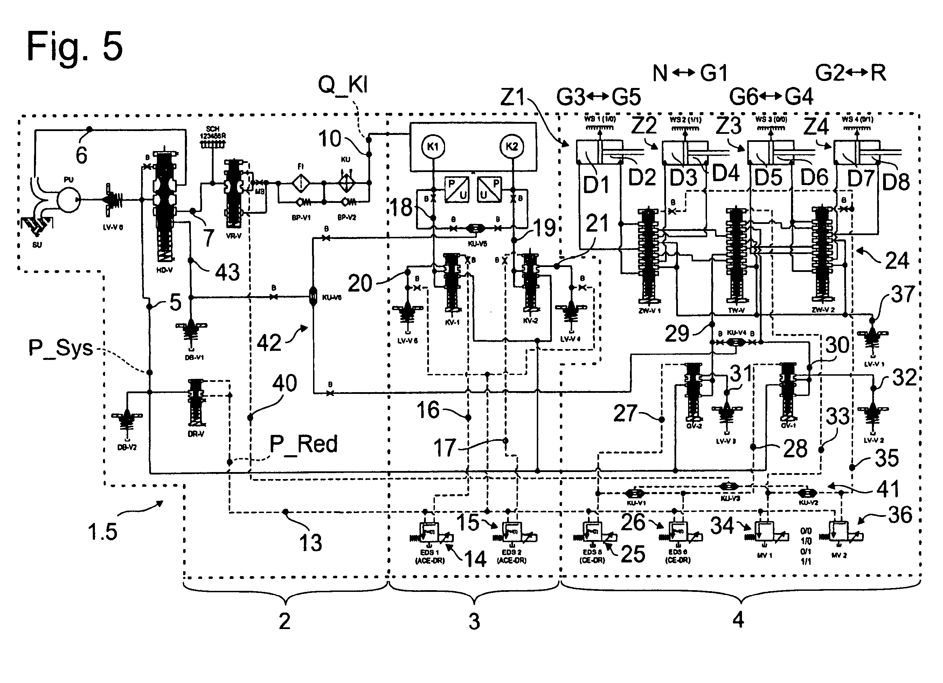

In einer fünften Ausführungsform einer hydraulischen Steuerungsvorrichtung 1.5 nach Fig. 5 welche nicht Inhalt der Erfindung ist ist zusätzlich zu der Ausführungsvariante der Fig. 3 zur Ansteuerung des Hauptdruckventils HD-V nunmehr anstelle des als elektrischer Drucksteller (EDS3) ausgebildeten Vorsteuerventils 8 eine zweite Zwischenventilanordnung 42 vorgesehen. Die zweite Zwischenventilanordnung 42 umfasst drei Wechselventile KU-V4, KU-V5, KU-V6 mit jeweils zwei Eingängen und einem Ausgang.

Die beiden Eingänge des ersten Wechselventils KU-V4 stehen mit den Arbeitsdruckleitungen 29, 30 der beiden Gangventile GV-1, GV-2 in Verbindung, die beiden Eingänge des zweiten Wechselventils KU-V5 sind mit den Arbeitsdruckleitungen 18, 19 der beiden Kupplungsventile KV-1, KV-2 verbunden, und die beiden Eingänge des dritten Wechselventils KU-V6 sind in Verbindung mit den Ausgängen der beiden anderen Wechselventile KU-V4 und KU-V5. An den Ausgang des dritten Wechselventils KU-V6 ist eine zu einem federseitigen stirnseitigen Druckraum des Hauptdruckventils HD-V führende ausgangsseitige Steuerdruckleitung 43 angeschlossen, die eine Blende B aufweist und an die ein Druckbegrenzungsventil DB-V1 angeschlossen ist. Somit erfolgt eine Erhöhung des Systemdruckes P-Sys entsprechend dem höchsten Arbeitsdruck in einer der vier Arbeitsdruckleitungen 18, 19, 29, 30 des Kupplungsbetätigungsteils 3 und des Getriebebetätigungsteils 4.

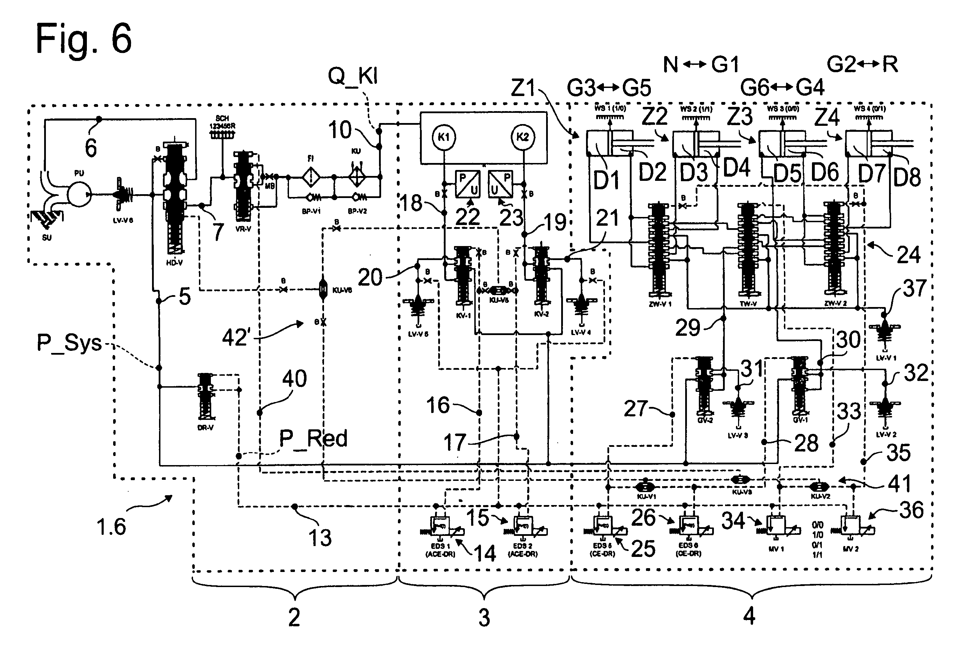

In einer sechsten Ausführungsvariante einer hydraulischen Steuerungsvorrichtung 1.6 gemäß Fig. 6 welche nicht Inhalt der Erfindung ist ist zur Ansteuerung des Hauptdruckventils HD-V ebenfalls anstelle des als elektrischer Drucksteller (EDS3) ausgebildeten Vorsteuerventils 8 nach Fig. 3 eine Zwischenventilanordnung 42' vorgesehen, die weitgehend der Zwischenventilanordnung 42 gemäß Fig. 5 entspricht. Im Unterschied dazu stehen nunmehr jedoch die beiden Eingänge des ersten Wechselventils, das vorliegend identisch mit dem ersten Wechselventil KU-V1 der Zwischenventilanordnung 41 ist, mit den Steuerdruckleitungen 27, 28 der beiden Gangventile GV-1, GV-2 und die beiden Eingänge des zweiten Wechselventils KU-V5 mit den Steuerdruckleitungen 16, 17 der beiden Kupplungsventile KV-1, KV-2 in Verbindung. Somit erfolgt eine Erhöhung des Systemdruckes P-Sys entsprechend dem höchsten Steuerdruck in einer der vier Steuerdruckleitungen 16, 17, 27, 28 des Kupplungsbetätigungsteils 3 und des Getriebebetätigungsteils 4.

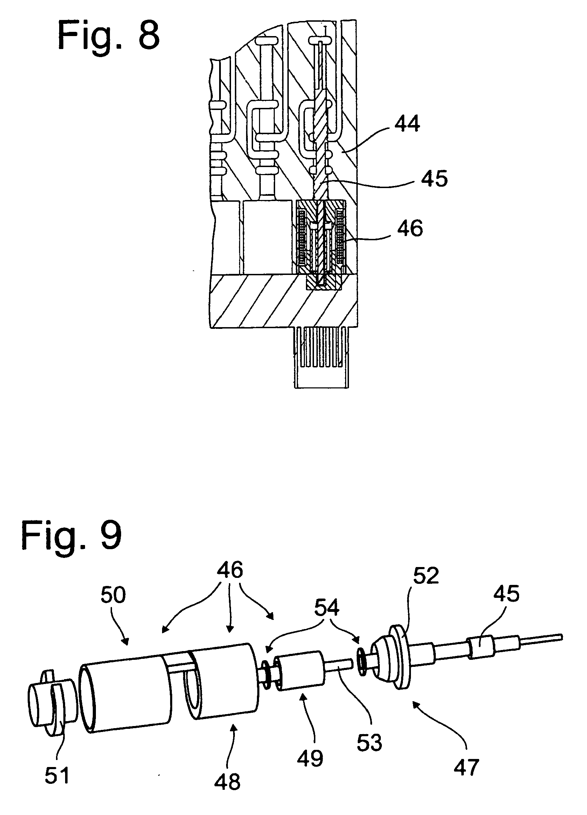

Weitere Kosten- und Bauraumeinsparungen können bei den vorbeschriebenen hydraulischen Steuerungsvorrichtungen 1.1 bis 1.6 zusätzlich dadurch erzielt werden, dass mehrere als Magnetventile ausgebildete Vorsteuerventile 8, 11, 11', 14, 15, 25, 26, 34, 36 des Ölversorgungsteils 2 und/oder des Kupplungsbetätigungsteils 3 und/oder des Getriebebetätigungsteils 4 in einem gemeinsamen Ventilgehäuse 44 angeordnet werden. Ein derartiges Ventilgehäuse 44 ist beispielhaft zusammen mit einem im Wesentlichen einen Ventilkolben 45 und einen Elektromagneten 46 umfassenden Ventileinsatz 47 eines Magnetventils in Fig. 8 abgebildet. Die Einzelteile eines zur Montage in einem gemeinsamen Ventilgehäuse 44 vorgesehenen Ventileinsatzes 47 sind in Fig. 9 abgebildet. Der Ventileinsatz 47 umfasst eine Magnetspule 48, einen Magnetanker 49, ein Magnetgehäuse 50, ein äußeres Polrohrteil 51, ein inneres Polrohrteil 52, einen Ankerstab 53, zwei Gleitlagerbuchsen 54 und den Ventilkolben 45.

### Bezugiszeichen

- 1.0: Hydraulische Steuerungsvorrichtung
- 1.1: Hydraulische Steuerungsvorrichtung
- 1.2: Hydraulische Steuerungsvorrichtung
- 1.3: Hydraulische Steuerungsvorrichtung
- 1.4: Hydraulische Steuerungsvorrichtung
- 1.5: Hydraulische Steuerungsvorrichtung
- 1.6: Hydraulische Steuerungsvorrichtung
- 2: Ölversorgungsteil
- 3: Kupplungsbetätigungsteil
- 4: Getriebebetätigungsteil
- 5: Hauptdruckleitung
- 6: Rückflussleitung
- 7: Sekundärdruckleitung
- 8: Vorsteuerventil
- 9: Steuerdruckleitung
- 10: Kühlölleitung
- 11: Vorsteuerventil
- 11': Vorsteuerventil
- 12: Steuerdruckleitung
- 13: Steuerdruck-Versorgungsleitung
- 14: Vorsteuerventil
- 15: Vorsteuerventil
- 16: Steuerdruckleitung
- 17: Steuerdruckleitung
- 18: Arbeitsdruckleitung
- 19: Arbeitsdruckleitung
- 20: Drucklosleitung
- 21: Drucklosleitung

- 22: Drucksensor
- 23: Drucksensor
- 24: Multiplexanordnung
- 25: Vorsteuerventil
- 26: Vorsteuerventil
- 27: Steuerdruckleitung
- 28: Steuerdruckleitung
- 29: Arbeitsdruckleitung
- 30: Arbeitsdruckleitung
- 31: Drucklosleitung
- 32: Drucklosleitung
- 33: Schaltdruckleitung
- 34: Vorsteuerventil
- 35: Schaltdruckleitung
- 36: Vorsteuerventil
- 37: Sammelleitung
- 38: Zwischenventilanordnung
- 38': Zwischenventilanordnung
- 39: Verbindungsleitung
- 40: Steuerdruckleitung (ausgangsseitig)
- 41: Zwischenventilanordnung
- 42: Zwischenventilanordnung
- 42': Zwischenventilanordnung
- 43: Steuerdruckleitung (ausgangsseitig)
- 44: Ventilgehäuse
- 45: Ventilkolben
- 46: Elektromagnet
- 47: Ventileinsatz
- 48: Magnetspule
- 49: Magnetanker
- 50: Magnetgehäuse
- 51: Äußeres Polrohrteil
- 52: Inneres Polrohrteil
- 53: Ankerstab
- 54: Gleitlagerbuchse

- ACE-DR: Druckregler
- B: Blende
- BP-V1, BP-V2: Bypassventil
- CE-DR: Druckregler
- DB-V1: Druckbegrenzungsventil
- DR-V: Druckreduzierventil
- DS: Drucksensor
- D1 - D8: Druckraum
- EDS1 - EDS6: elektrischer Drucksteller
- FI: Filter
- GV1, GV2: Gangventil
- G1 - G6: (Vorwärts-) Gang
- HD-V: Hauptdruckventil
- KU: Kühler
- KU-V1 - KU-V6: Wechselventil
- KV-1, KV-2: Kupplungsventil
- K1, K2: Kupplung
- LV-V1 - LV-V6: Leerlaufverhinderungsventil
- MB: Messblende
- MV1 - MV3: Magnetventil
- N: Leerlauf
- P: Druck
- P_Red: Reduzierdruck
- P_Sys: Systemdruck
- PU: Pumpe
- Q_Kl: Kühlölvolumenstrom
- R: Rückwärtsgang
- SCH: Schmierung
- SU: Ölsumpf (mit Saugfilter)
- TW-V: Teilgetriebewahlventil
- U: Elektrische Spannung
- VR-V: Volumenstromregelventil
- VV-1, VV-2: Vorventil
- WS1 - WS4: Wegsensor
- ZW-V1, ZW-V2: Zylinderwahlventil
- Z1 - Z4: Gangstellzylinder

## Patentansprüche

1. Hydraulische Steuerungsvorrichtung eines automatisierten Doppelkupplungsgetriebes eines Kraftfahrzeugs, mit einem Ölversorgungsteil (2), der mindestens ein druckgesteuertes Hauptdruckventil (HD-V) zur Regelung eines Systemdrucks (P_Sys) und ein druckgesteuertes Volumenstromregelventil (VR-V) zur Regelung eines Kühlölvolumenstroms (Q_KI) aufweist, mit einem Kupplungsbetätigungsteil (3), der für jede von zwei als aktiv schließbare Lamellenkupplungen ausgebildete Kupplungen (K1, K2) ein druckgesteuertes Kupplungsventil (KV-1, KV-2) zur Steuerung eines zugeordneten Kupplungsstellzylinders aufweist, und mit einem Getriebebetätigungsteil (4), der mindestens zwei druckgesteuerte Gangventile (GV-1, GV-2) zur unabhängigen Regelung der Arbeitsdrücke von zwei Druckräumen (D1 - D8) mehrerer Gangstellzylinder (Z1 - Z4) und mehrere druckgesteuerte Wahlventile (TW-V, ZW-V1, ZW-V2) zur Zuordnung der beiden Gangventile (GV-1, GV-2) zu den Druckräumen (D1 - D8) der Gangstellzylinder (Z1 - Z4) aufweist, wobei eine Zwischenventilanordnung (38, 38', 41) zur Ansteuerung des Volu- menstromregelventils (VR-V) vorgesehen ist,
**dadurch gekennzeichnet , dass** die zwischen vertilavordnung (38,38',41) eingangsseitig von mindestens einem Arbeitsdruck oder einem Steuerdruck des Kupplungsbetätigungsteils (3) oder des Getriebebetätigungsteils (4) beaufschlagt wird, und durch die das Volumenstromregelventil (VR-V) über eine ausgangsseitige Steuerdruckleitung (40) im öffnenden Sinn mit einem lastabhängigen Steuerdruck ansteuerbar ist.

2. Steuerungsvorrichtung nach Anspruch 1, **dadurch gekennzeichnet, dass** die Zwischenventilanordnung (38, 38') zwei als Schieberventile ausgebildete druckgesteuerte Vorventile (VV-1, VV-2) mit jeweils einem Ventilkolben, einer Ventilfeder, einem federabgewandten stirnseitigen Steuerdruckraum, einem federseitigen Rückkopplungsdruckraum und einem beidseitig durch Steuerkanten benachbarter Kolbenbunde des Ventilkolbens begrenzten mittigen Druckraum umfasst, wobei das erste Vorventil (VV-1) an seinem Steuerdruckraum mit einer Arbeitsdruckleitung oder einer Steuerdruckleitung eines ersten Zweiges des Kupplungsbetätigungsteils (3) oder des Getriebebetätigungsteils (4) verbunden ist, an seinem mittleren Druckraum eingangsseitig mit einer Verbindungsleitung (39) und ausgangsseitig mit der ausgangsseitigen Steuerdruckleitung (40) in Verbindung steht, und an seinem Rückkopplungsdruckraum mit der ausgangsseitigen Steuerdruckleitung (40) verbunden ist, und wobei das zweite Vorventil (VV-2) an seinem Steuerdruckraum mit einer Arbeitsdruckleitung oder einer Steuerdruckleitung eines zweiten Zweiges des Kupplungsbetätigungsteils (3) oder des Getriebebetätigungsteils (4) verbunden ist, an seinem mittleren Druckraum eingangsseitig mit der Steuerdruck-Versorgungsleitung (13) und ausgangsseitig mit der zu dem ersten Vorventil (VV-1) führenden Verbindungsleitung (39) in Verbindung steht, und an seinem Rückkopplungsdruckraum mit der ausgangsseitigen Steuerdruckleitung (40) verbunden ist.

3. Steuerungsvorrichtung nach Anspruch 2, **dadurch gekennzeichnet, dass** das erste Vorventil (VV-1) an seinem Steuerdruckraum mit der Arbeitsdruckleitung (18) eines der beiden Kupplungsventile (KV-1) und das zweite Vorventil (VV-2) an seinem Steuerdruckraum mit der Arbeitsdruckleitung (19) des anderen Kupplungsventils (KV-2) in Verbindung steht.

4. Steuerungsvorrichtung nach Anspruch 3, **dadurch gekennzeichnet, dass** die Kupplungsstellzylinder der beiden Kupplungen (K1, K2) über zugeordnete Rückstellfedern derart vorgespannt sind, dass die beiden Kupplungsventile (KV-1, KV-2) jeweils einen unteren Regelbereich zur Ansteuerung der Vorventile (VV-1, VV-2) und einen oberen Regelbereich zur Ansteuerung der Kupplungsstellzylinder aufweisen.

5. Steuerungsvorrichtung nach Anspruch 2, **dadurch gekennzeichnet, dass** das erste Vorventil (VV-1) an seinem Steuerdruckraum mit der Steuerdruckleitung (16) eines der beiden Kupplungsventile (KV-1) und das zweite Vorventil (VV-2) an seinem Steuerdruckraum mit der Steuerdruckleitung (17) des anderen Kupplungsventils (KV-2) in Verbindung steht.

6. Steuerungsvorrichtung nach Anspruch 5, **dadurch gekennzeichnet, dass** die beiden Kupplungsventile (KV-1, KV-2) über zugeordnete Ventilfedern derart vorgespannt sind, dass die beiden Vorsteuerventile (14, 15) der Kupplungsventile (KV-1, KV-2) jeweils einen unteren Regelbereich zur Ansteuerung der Vorventile (VV-1, VV-2) und einen oberen Regelbereich zur Ansteuerung der Kupplungsventile (KV-1, KV-2) aufweisen.

7. Steuerungsvorrichtung nach Anspruch 1, **dadurch gekennzeichnet, dass** die Zwischenventilanordnung (41) drei Wechselventile (KU-V1, KU-V2, KU-V3) mit jeweils zwei Eingängen und einem Ausgang umfasst, wobei die beiden Eingänge des ersten Wechselventils (KU-V1) jeweils mit einer Steuerdruckleitung (27, 28) eines anderen der beiden Gangventite (GV-1, GV-2) in Verbindung sind, die beiden Eingänge des zweiten Wechselventils (KU-V2) jeweils mit einer Schaltdruckleitung (33, 35) einer anderen von zwei Funktionsgruppen von Wahlventilen (TW-V; ZW-V1, ZW-V2) verbunden sind, die beiden Eingänge des dritten Wechselventils (KU-V3) mit den Ausgängen der beiden anderen Wechselventile (KU-V1, KU-V2) in Verbindung stehen, und der Ausgang des dritten Wechselventils (KU-V3) mit der ausgangsseitigen Steuerdruckleitung (40) in Verbindung ist.

8. Steuerungsvorrichtung nach zumindest einem der Ansprüche 1 bis 7, **dadurch gekennzeichnet, dass** mehrere als Magnetventile ausgebildete Vorsteuerventile (8, 11, 11', 14, 15, 25, 26, 34, 36) des Ölversorgungsteils (2) und/oder des Kupplungsbetätigungsteils (3) und/oder des Getriebebetätigungsteils (4) ein gemeinsames Ventilgehäuse (44) aufweisen.

## Claims

1. Hydraulic control device of an automated double clutch gearbox of a motor vehicle, having an oil supply part (2) which has at least one pressure-controlled main pressure valve (HD-V) for regulating a system pressure (P_Sys) and a pressure-controlled volume flow regulating valve (VR-V) for regulating a cooling oil volume flow (Q_KI), having a clutch operating part (3) which, for each of two clutches (K1, K2) formed as actively closable multiplate clutches, has a pressure-controlled clutch valve (KV-1, KV-2) for controlling an associated clutch actuating cylinder, and having a transmission operating part (4) which has at least two pressure-controlled gear valves (GV-1, GV-2) for independently regulating the working pressures of two pressure chambers (D1-D8) of a plurality of gear actuating cylinders (Z1 - Z4) and which has a plurality of pressure-controlled selector valves (TW-V, ZW-V1, ZW-V2) for assigning the two gear valves (GV-1, GV-2) to the pressure chambers (D1 - D8) of the gear actuating cylinders (Z1 - Z4), wherein an intermediate valve arrangement (38, 38', 41) is provided for activating the volume flow regulating valve (VR-V), **characterized in that** the intermediate valve arrangement (38, 38', 41) is acted on at the inlet side by at least one working pressure or one control pressure of the clutch operating part (3) or of the transmission operating part (4), and by means of which the volume flow regulating valve (VR-V) can be activated in the opening sense with a load-dependent control pressure via an outlet-side control pressure line (40).

2. Control device according to Claim 1, **characterized in that** the intermediate valve arrangement (38, 38') comprises two pressure-controlled pilot valves (VV-1, VV-2) which are in the form of slide valves and which each have a valve piston, a valve spring, a control pressure chamber at the end side remote from the spring, a feedback pressure chamber at the spring side, and a central pressure chamber which is delimited at both sides by control edges of adjacent piston collars of the valve piston, wherein the first pilot valve (VV-1) is connected at its control pressure chamber to a working pressure line or to a control pressure line of a first branch of the clutch operating part (3) or of the transmission operating part (4), is connected at its central pressure chamber at the inlet side to a connecting line (39) and at the outlet side to the outlet-side control pressure line (40), and at its feedback pressure chamber to the outlet-side control pressure line (40), and wherein the second pilot valve (VV-2) is connected at its control pressure chamber to a working pressure line or to a control pressure line of a second branch of the clutch operating part (3) or of the transmission operating part (4), is connected at its central pressure chamber at the inlet side to the control pressure supply line (13) and at the outlet side to the connecting line (39) which leads to the first pilot valve (VV-1), and is connected at its feedback pressure chamber to the outlet-side control pressure line (40).

3. Control device according to Claim 2, **characterized in that** the first pilot valve (VV-1) is connected at its control pressure chamber to the working pressure line (18) of one of the two clutch valves (KV-1), and the second pilot valve (VV-2) is connected at its control pressure chamber to the working pressure line (19) of the other clutch valve (KV-2).

4. Control device according to Claim 3, **characterized in that** the clutch actuating cylinders of the two clutches (K1, K2) are preloaded by means of associated restoring springs such that the two clutch valves (KV-1, KV-2) have in each case a lower regulating range for activating the pilot valves (VV-1, VV-2) and an upper regulating range for activating the clutch actuating cylinders.

5. Control device according to Claim 2, **characterized in that** the first pilot valve (VV-1) is connected at its control pressure chamber to the control pressure line (16) of one of the two clutch valves (KV-1) and the second pilot valve (VV-2) is connected at its control pressure chamber to the control pressure line (17) of the other clutch valve (KV-2).

6. Control device according to Claim 5, **characterized in that** the two clutch valves (KV-1, KV-2) are preloaded by means of associated valve springs such that the two pilot control valves (14, 15) of the clutch valves (KV-1, KV-2) have in each case a lower regulating range for activating the pilot valves (VV-1, VV-2) and an upper regulating range for activating the clutch valves (KV-1, KV-2).

7. Control device according to Claim 1, **characterized in that** the intermediate valve arrangement (41) comprises three shuttle valves (KU-V1, KU-V2, KU-V3) with in each case two inlets and one outlet, wherein the two inlets of the first shuttle valve (KU-V1) are connected in each case to a control pressure line (27, 28) of a different one of the two gear valves (GV-1, GV-2), the two inlets of the second shuttle valve (KU-V2) are connected in each case to a switching pressure line (33, 35) of a different one of two functional groups of selector valves (TW-V; ZW-V1, ZW-V2), the two inlets of the third shuttle valve (KU-V3) are connected to the outlets of the two other shuttle valves (KU-V1, KU-V2), and the outlet of the third shuttle valve (KU-V3) is connected to the outlet-side control pressure line (40).

8. Control device according to at least one of Claims 1 to 7, **characterized in that** a plurality of pilot control valves (8, 11, 11', 14, 15, 25, 26, 34, 36), which are designed as solenoid valves, of the oil supply part (2) and/or of the clutch operating part (3) and/or of the transmission operating part (4) have a common valve housing (44).

## Revendications

1. Dispositif de commande hydraulique pour transmission automatique à double embrayage de véhicules automobiles, le dispositif présentant
une partie (2) d'alimentation en huile qui présente au moins une soupape principale de pression (HD-V) asservie à la pression et régulant la pression du système (P_Sys) et une soupape (VR-V) de régulation de débit volumique qui régule le débit volumique (Q_K1) d'huile de refroidissement,
une partie (3) d'actionnement d'embrayage qui présente des soupapes (KV-1, KV-2) d'embrayage asservies à la pression, qui commandent un cylindre associé d'actionnement de l'embrayage pour deux embrayages (K1, K2) respectifs configurés sous la forme d'embrayages à lamelles aptes à être fermés activement et
une partie (4) d'actionnement de transmission qui présente au moins deux soupapes de rapport de transmission (GV-1, GV-2) asservies à la pression, qui régulent de manière indépendante la pression de travail de deux espaces sous pression (D1-D8) de plusieurs cylindres (Z1-Z4) de changement de rapport de transmission, et plusieurs soupapes de sélection (TW-V, ZW-V1, ZW-V2) asservies à la pression qui associent les deux soupapes (GV-1, GV-2) de changement de rapport de transmission aux espaces sous pression (D1-D8) des cylindres (Z1-Z4) de changement de rapport de transmission,
un ensemble (38, 38', 41) de soupapes intermédiaires qui commande la soupape (VR-V) de régulation de débit volumique étant prévue,
**caractérisé en ce que**
l'ensemble (38, 38', 41) de soupapes intermédiaires reçoit à son entrée au moins une pression de travail ou une pression de commande de la partie (3) d'actionnement de l'embrayage ou de la partie (4) d'actionnement de la transmission et peut être commandé dans le sens de l'ouverture par une pression de commande qui dépend de la charge par la soupape (VR-V) de régulation de débit volumique par l'intermédiaire d'un conduit (40) de pression de commande situé du côté de la sortie.

2. Dispositif de commande selon la revendication 1, **caractérisé en ce que** l'ensemble (38, 38') de soupapes intermédiaires comporte deux pré-soupapes (VV-1, VV-2) asservies à la pression et configurées comme soupapes à coulisseau, chacune avec un piston de soupape, un ressort de soupape, un espace frontal de pression de commande, non tourné vers le ressort, un espace sous pression de rétroaction situé côté ressort et un espace central sous pression délimité des deux côtés par les collets du piston de soupape voisins des arêtes de commande, la première pré-soupape (VV-1) étant reliée par son espace sous pression de commande à un conduit sous pression de travail ou à un conduit sous pression de commande d'une première branche de la partie (3) d'actionnement de l'embrayage ou de la partie (4) d'actionnement de la transmission, communiquant à son entrée avec un conduit de liaison (39) et à sa sortie avec le conduit (40) de pression de commande côté sortie par son espace central sous pression et étant reliée au conduit (40) de pression de commande situé côté sortie par son espace sous pression de rétroaction, la deuxième pré-soupape (VV-2) étant reliée par son espace sous pression de commande à un conduit sous pression de travail ou à un conduit sous pression de commande d'une deuxième branche de la partie (3) d'actionnement d'embrayage ou de la partie (4) d'actionnement de transmission, communiquant du côté de son entrée avec le conduit (13) d'alimentation en pression de commande et du côté de sa sortie avec le conduit de liaison (39) qui conduit à la première pré-soupape (VV-1) par son espace central sous pression et étant reliée au conduit (40) de pression de commande situé côté sortie par son espace sous pression de rétroaction.

3. Dispositif de commande selon la revendication 2, **caractérisé en ce que** la première pré-soupape (VV-1) communique par son espace sous pression de commande avec le conduit (18) sous pression de travail de l'une des deux soupapes d'embrayage (KV-1) et **en ce que** la deuxième pré-soupape (VV-2) communique par son espace sous pression de commande avec le conduit (19) sous pression de travail de l'autre soupape d'embrayage (KV-2).

4. Dispositif de commande selon la revendication 3, **caractérisé en ce que** les cylindres d'actionnement d'embrayage des deux embrayages (K1, K2) sont précontraints par des ressorts de rappel qui leur sont associés de telle sorte que les deux soupapes d'embrayage (KV-1, KV-2) présentent chacune une plage basse de régulation qui commande les pré-soupapes (VV-1, VV-2) et une plage haute de régulation qui commande les cylindres d'actionnement d'embrayage.

5. Dispositif de commande selon la revendication 2, **caractérisé en ce que** la première pré-soupape (VV-1) communique par son espace sous pression de commande avec le conduit (16) de pression de commande de l'une des deux soupapes d'embrayage (KV-1) et **en ce que** la deuxième pré-soupape (VV-2) communique par son espace sous pression de commande avec le conduit (17) sous pression de commande de l'autre soupape d'embrayage (KV-2).

6. Dispositif de commande selon la revendication 5, **caractérisé en ce que** les deux soupapes d'embrayage (KV-1, KV-2) sont précontraintes par des ressorts de soupape qui leur sont associés de telle sorte que les deux pré-soupapes de commande (14, 15) des soupapes d'embrayage (KV-1, KV-2) présentent chacune une plage basse de régulation qui commande les pré-soupapes (VV-1, VV-2) et une plage haute de régulation qui commande les soupapes d'embrayage (KV-1, KV-2).

7. Dispositif de commande selon la revendication 1, **caractérisé en ce que** l'ensemble (41) de soupapes intermédiaires comporte trois soupapes d'inversion (KU-V1, KU-V2, KU-V3) qui présentent chacune deux entrées et une sortie, les deux entrées de la première soupape d'inversion (KU-V1) étant chacune en communication avec un conduit (27, 28) sous pression de commande de l'autre des deux soupapes de changement de rapport de transmission (GV-1, GV-2), les deux entrées de la deuxième soupape d'inversion (KU-V2) étant chacune reliées à un conduit (33, 35) sous pression de commutation de l'autre des deux groupes fonctionnels de soupape de sélection (TW-V; ZW-V1, ZW-V2), les deux entrées de la troisième soupape d'inversion (KU-V3) étant reliées aux sorties des deux autres soupapes d'inversion (KU-V1, KU-V2) et la sortie de la troisième soupape d'inversion (KU-V3) étant reliée au conduit (40) de pression de commande situé du côté de la sortie.

8. Dispositif de commande selon au moins l'une des revendications 1 à 7, **caractérisé en ce que** plusieurs pré-soupapes de commande (8, 11, 11', 14, 15, 25, 26, 34, 36) configurées comme soupapes magnétiques de la partie (2) d'alimentation en huile et/ou de la partie (3) d'actionnement d'embrayage et/ou de la partie (4) d'actionnement de transmission présentent un boîtier de soupape (44) commun.
